# DEMANDE DE BREVET EUROPEEN

(11) **EP 4 297 342 A1**
(43) Date de publication de la demande: **27.12.2023**
(21) Numéro de dépôt: 23180829.6
(22) Date de dépôt: 22.06.2023
(51) Int. Cl.: H04L 9/40

(54) **DISPOSITIF ÉLECTRONIQUE DE FILTRAGE DE DONNÉES ET PROCÉDÉ DE FILTRAGE DE DONNÉES ASSOCIÉ**

(30) Priorité: 23.06.2022 FR 2206241
(71) Demandeur: THALES, 92400 Courbevoie (FR)
(72) Inventeur: BRIANTAIS, Nicolas, 92622 GENNEVILLIERS CEDEX (FR); SINNA, Joseph Eric, 92622 GENNEVILLIERS CEDEX (FR); FINKELSTEIN, Vincent, 92622 GENNEVILLIERS CEDEX (FR); GASNIER, Franck, 49309 CHOLET (FR)
(74) Mandataire: Lavoix

(57) **Abrégé**

Ce dispositif électronique de filtrage de données (10) est configuré pour filtrer des données (14), et comprend une première unité de filtrage (16) comprenant un bloc de filtrage (22).
Le bloc de filtrage (22) comprend :
- un module de configuration (26), configuré pour stocker un jeu d'instructions d'extraction, un jeu d'instructions d'évaluation et un jeu d'instructions d'action,
- un premier module d'extraction (28) pour initialiser un ensemble d'opérandes de filtrage en fonction de la trame (T),
- un premier module de vérification (30) pour vérifier des règles de filtrage en fonction des opérandes de filtrage initialisés, et
- un premier module d'action (32) pour effectuer une action sur la trame (T) en fonction de la vérification des règles de filtrage.

Les premiers modules d'extraction (28), de vérification (30) et d'action (32) sont réalisés sous forme d'un FPGA ou d'un circuit ASIC.

## Description

La présente invention concerne un dispositif électronique de filtrage de données. La présente invention concerne en outre un procédé de filtrage de données.

Dans le domaine du traitement de données dans les réseaux de communication, il est connu d'utiliser des dispositifs de filtrage pour filtrer des données entre un premier réseau informatique et un deuxième réseau informatique. Les données filtrées peuvent par exemple être des données de différents niveaux de sensibilité et les dispositifs de filtrage dans de tels contexte sont généralement nommés des dispositifs de filtrage multi-niveaux.

Afin de filtrer les données entre deux réseaux informatiques, il est connu d'utiliser des solutions logicielles venant filtrer les trames de données circulant entre le premier réseau informatique et le deuxième réseau informatique.

De tels dispositifs de filtrage implémentés sur logiciel permettent aux dispositifs de filtrage d'être configurés facilement. Toutefois, de tels dispositifs ne donnent pas entière satisfaction.

En effet, le débit de tels dispositifs est parfois faible, de tels logiciels ne pouvant généralement traiter qu'un flux de données limité avec une latence élevée entre le premier réseau informatique et le deuxième réseau informatique.

L'intégrité de tels dispositifs de filtrage peut en outre, de part la nature logicielle du filtrage, être facilement remise en cause, résultant en une sécurité insatisfaisante du dispositif.

Un des buts de l'invention est alors de fournir un dispositif de filtrage qui soit à la fois configurable, qui présente une latence faible et maitrisée, un haut débit ainsi qu'une intégrité élevée.

A cet effet, l'invention a pour un dispositif électronique de filtrage de données configuré pour filtrer des données entre un premier réseau informatique et un deuxième réseau informatique, le dispositif électronique de filtrage comprenant une première unité de filtrage, configurée pour filtrer une trame de données depuis le premier réseau informatique vers le deuxième réseau informatique, la première unité de filtrage comprenant un bloc de filtrage,
le bloc de filtrage comprenant :
   - un module de configuration, configuré pour stocker un jeu d'instructions d'extraction, un jeu d'instructions d'évaluation et un jeu d'instructions d'action,
   - un premier module d'extraction, configuré pour exécuter au moins une instruction du jeu d'instructions d'extraction afin d'initialiser un ensemble d'opérandes de filtrage en fonction de la trame,
   - un premier module de vérification, configuré pour exécuter au moins une instruction du jeu d'instructions d'évaluation afin de vérifier des règles de filtrage en fonction des opérandes de filtrage initialisés, et
   - un premier module d'action, configuré pour exécuter au moins une instruction du jeu d'instructions d'action afin d'effectuer une action sur la trame en fonction de la vérification des règles de filtrage,
le premier module d'extraction, le premier module de vérification et le premier module d'action étant réalisé sous forme d'un FPGA ou d'un circuit ASIC.

L'utilisation de jeux d'instruction au sein des modules d'extraction, de vérification et d'exécution d'action est particulièrement avantageuse pour assurer la configurabilité du dispositif. L'architecture matérielle du dispositif de filtrage, et notamment la mise en oeuvre de ses premiers modules d'extraction, de vérification et d'action sous forme de FPGA ou de circuit ASIC, permet l'obtention d'un filtrage de faible latence tout en réduisant les risques de failles sécuritaire du filtre, améliorant ainsi l'intégrité du filtre.

Suivant d'autres aspects avantageux de l'invention, le dispositif électronique de filtrage comprend une ou plusieurs des caractéristiques suivantes, prises isolément ou suivant toutes les combinaisons techniquement possibles :
- le bloc de filtrage comprend en outre une mémoire de configuration, configurée pour stocker une donnée d'initialisation, le premier module d'extraction étant configuré pour exécuter au moins une instruction du jeu d'instructions d'extraction afin d'initialiser l'ensemble d'opérandes de filtrage en outre en fonction de la donnée d'initialisation stockée ;
- le premier module d'action est en outre configuré pour exécuter au moins une instruction du jeu d'instructions d'action afin de stocker une donnée d'initialisation provenant de la trame dans la mémoire de configuration en fonction de la vérification des règles de filtrage ;
- la première unité de filtrage comprend un bloc de contrôle de conformité comprenant :
   - un module d'injection de règles de conformité,
   - un module de contrôle, configuré pour :
      + acquérir la trame à filtrer depuis le premier réseau informatique;
      + acquérir une pluralité de règles de conformité depuis le module d'injection de règles conformité; et
      + transmettre la trame à filtrer au bloc de filtrage en fonction d'un contrôle de la conformité entre la trame à filtrer et la pluralité de règles de conformité acquise ;
   - le dispositif électronique comprend une mémoire opérationnelle, le premier module d'extraction étant configuré pour initialiser l'ensemble d'opérandes de filtrage simultanément au stockage de la trame sur la mémoire opérationnelle, le premier module d'action étant configuré pour effectuer une action sur ladite trame stockée ;
   - les instructions du jeu d'instructions d'extraction et/ou de vérification et/ou d'exécution sont arrangés sous la forme d'arbres décisionnels ;
   - le dispositif comprend :
      - un deuxième module d'extraction, configuré pour exécuter au moins une instruction du jeu d'instructions d'extraction afin d'initialiser un ensemble d'opérandes d'automates protocolaires en fonction de la trame,
      - un deuxième module de vérification, configuré pour exécuter au moins une instruction du jeu d'instructions d'évaluation afin de vérifier des règles d'automates protocolaires en fonction des opérandes d'automates protocolaires initialisés, et
      - un deuxième module d'action, configuré pour exécuter au moins une instruction du jeu d'instructions d'action afin d'effectuer une action d'automate protocolaire en fonction de la vérification des règles d'automates protocolaires ;
   - le premier module d'extraction et le deuxième module d'extraction sont configurés pour initialiser simultanément les opérandes de filtrage, respectivement d'automates protocolaires et/ou le premier module de vérification et le deuxième module de vérification sont configurés pour vérifier simultanément les règles de filtrage, respectivement d'automates protocolaires ;
   - le premier module de vérification, comprend une pluralité de moteurs de vérification des règles de filtrage, chaque moteur étant configuré pour vérifier au moins une règle de filtrage indépendamment des autres moteurs de vérification ;
   - les actions effectuées par le premier module d'action comprennent :
      - l'adjonction de données à la trame, la modification de données de la trame; et/ou
      - la suppression de la trame, la transmission de la trame vers le deuxième réseau informatique ;
   - la première unité de filtrage comprend au moins une diode configurée pour bloquer un transfert de données depuis le deuxième réseau informatique vers le premier réseau informatique ;
   - la première unité de filtrage est configurée pour filtrer la trame de données au niveau d'une couche OSI de niveau supérieur ou égal à 3 ; et
   - le dispositif comprend une deuxième unité de filtrage semblable à la première unité de filtrage, la deuxième unité de filtrage étant configurée pour filtrer des données depuis le deuxième réseau informatique vers le premier réseau informatique.

L'invention concerne en outre un procédé de filtrage de données entre un premier réseau informatique et un deuxième réseau informatique, mis en oeuvre par un dispositif électronique tel que précité comprenant les étapes suivantes :
- initialisation, par l'exécution d'au moins une instruction du jeu d'instructions d'extraction afin d'initialiser un ensemble d'opérandes de filtrage en fonction d'une trame,
- vérification, par l'exécution d'au moins une instruction du jeu d'instructions d'évaluation afin de vérifier des règles de filtrage en fonction des opérandes de filtrage initialisés, et
   - action, par l'exécution d'au moins une instruction du jeu d'instructions d'action afin d'effectuer une action sur la trame en fonction de la vérification des règles de filtrage.

L'invention sera mieux comprise à la lecture de la description qui va suivre, donnée uniquement à titre d'exemple non limitatif et faite en se référant aux figures suivantes, dans lesquelles :
[Fig 1] la figure 1 est un représentation schématique d'un dispositif électronique selon l'invention ;
[Fig 2] la figure 2 est une représentation schématique de la première unité de filtrage du dispositif électronique de la figure 1 ; et
[Fig 3] la figure 3 est un organigramme représentatif d'un procédé de filtrage mis en oeuvre par le dispositif de la figure 1.

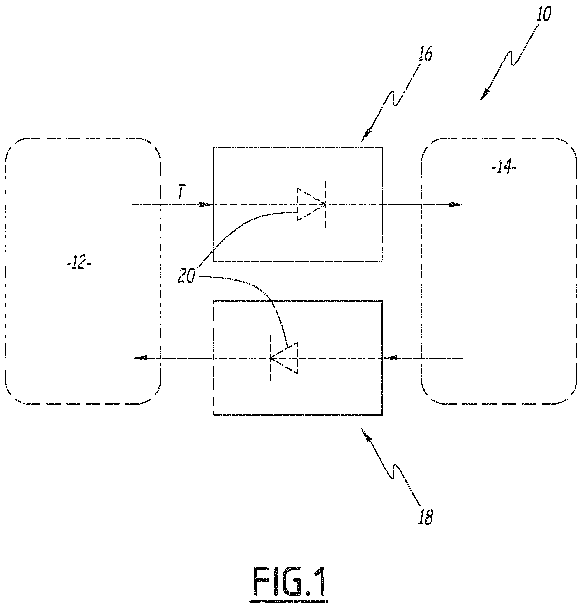

En référence à la figure 1, un dispositif électronique de filtrage de données 10, aussi appelé par la suite dispositif de filtrage 10, est configuré pour filtrer des données entre un premier réseau informatique 12 et un deuxième réseau informatique 14.

En particulier, le dispositif de filtrage 10 est configuré pour filtrer une trame T de données, c'est-à-dire un ensemble de données, entre le premier réseau informatique 12 et le deuxième réseau informatique 14.

Dans des variantes non illustrées, le dispositif de filtrage 10 est configuré pour filtrer des données entre plus de deux réseaux informatiques, par exemple entre un premier réseau informatique 12 et une pluralité de deuxièmes 14 réseaux informatiques.

Le premier réseau informatique 12 et le deuxième réseau informatique 14 sont par exemple des réseaux informatiques de différents niveaux de sensibilité. Selon un tel exemple, le dispositif de filtrage 10 est alors un dispositif de filtrage multiniveaux.

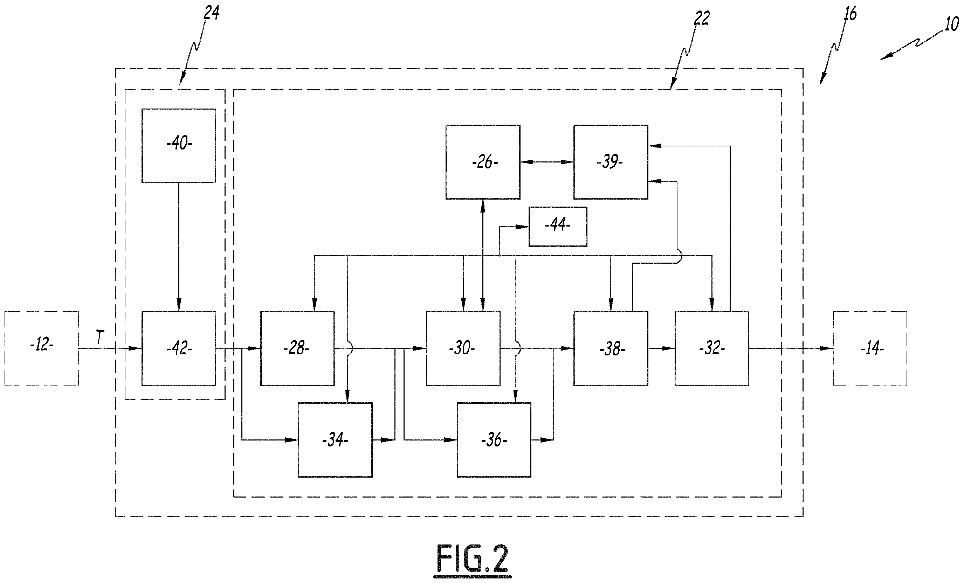

Comme illustré en figures 1 et 2, le dispositif de filtrage 10 comprend une première unité de filtrage 16 configuré pour filtrer une trame de données T depuis le premier réseau informatique 12 vers le deuxième réseau informatique 14.

Dans une variante particulière, et comme illustré en figure 1, le dispositif de filtrage 10 comprend une deuxième unité de filtrage 18, configurée pour filtrer des données, et en particulier une trame de données T, depuis le deuxième réseau 14 informatique vers le premier 12 réseau informatique.

Lorsque le dispositif de filtrage 10 est configuré pour filtrer des données entre plus de deux réseaux informatiques, le dispositif de filtrage comprend par exemple au moins une unité de filtrage entre chaque couple de premier 12 et de deuxième 14 réseau informatique.

La deuxième unité de filtrage 18 est de préférence semblable à la première unité de filtrage 16 qui sera décrite plus en détail dans la suite de cette description.

La première unité de filtrage 16 est par exemple configurée pour filtrer une trame T de données au niveau d'une couche quelconque du modèle OSI (acronyme anglais pour « *Open Systems Interconnection* »). La première unité de filtrage 16 est de préférence configurée pour filtrer T la trame de données au niveau d'une couche OSI de niveau supérieur ou égal à 3 c'est-à-dire au niveau d'une couche haute telle que définie par le modèle OSI, c'est-à-dire notamment une couche du modèle OSI d'un niveau supérieur au niveau des couches matérielles.

Comme illustré en figure 1, la première unité de filtrage 16 comprend au moins une diode 20 configurée pour bloquer un transfert de données depuis le deuxième réseau informatique 14 vers le premier réseau informatique 12. Selon une telle variante, la trame T ne peut circuler au travers de la première unité de filtrage que depuis le premier réseau informatique 12 vers le deuxième réseau informatique 14. Comme illustré en figure 1, et lorsque le dispositif de filtrage 10 comprend une deuxième unité de filtrage 18 semblable à la première unité de filtrage 16, la deuxième unité de filtrage 18 comprend au moins une diode 20 configurée pour bloquer un transfert de données depuis le premier réseau informatique 12 vers le deuxième réseau informatique 14.

Comme illustré en figure 2, la première unité de filtrage 16 comprend un bloc de filtrage 22 et comprend de préférence un bloc de contrôle de conformité 24.

Comme illustré en figure 2, et comme exposé plus en détail par la suite, le bloc de filtrage 22 comprend un module de configuration 26, un premier module d'extraction 28, un premier module de vérification 30 et un premier module d'action 32. Le bloc de filtrage 22 comprend en outre de préférence un deuxième module d'extraction 34, un deuxième module de vérification 36 et un deuxième module d'action 38. Le bloc de filtrage 22 comprend en outre par exemple une mémoire de configuration 39. Comme cela sera décrit plus en détails par la suite, la mémoire de configuration forme un module de stockage de données configuré pour stocker des données représentatives d'un contexte de filtrage ou des constantes pour le filtrage.

Le bloc de contrôle de conformité 24 comprend un module 40 d'injection de règles de conformité et un module de contrôle 42.

Le bloc de contrôle de conformité 24 est configuré pour contrôler la conformité de la trame T. En particulier le bloc de contrôle de conformité 24 est configuré pour contrôler la conformité syntaxique et/ou protocolaire de la trame T filtrée par le dispositif de filtrage 10.

Le module d'injection 40 est configuré pour injecter des règles de conformité vers le module de contrôle 42. Le module d'injection 40 comprend par exemple à cet effet une mémoire (non représentée) comprenant des règles de conformité et communique avec le module de contrôle pour y injecter les règles de conformité. La mémoire du module d'injection peut alors par exemple être assimilée à un dictionnaire comprenant une pluralité de règles de conformité, les règles de conformité étant par exemple relatives à différents protocoles de communication et syntaxes adoptés par la trame, c'est-à-dire par exemple à différents agencements des données formant la trame T au sein de la trame.

Dans l'exemple de la figure 2, le module de contrôle 42 est configuré pour acquérir la trame T à filtrer depuis le premier réseau informatique 12.

Le module de contrôle 42 est en outre configuré pour acquérir une pluralité de règles de conformité depuis le module d'injection 40.

Le module de contrôle 42 est configuré pour transmettre la trame T à filtrer au bloc de filtrage 22 en fonction d'un contrôle de la conformité entre la trame T à filtrer et la pluralité de règles de conformité acquise.

Lorsque les règles de conformité acquises sont des règles syntaxiques, le module de contrôle 42 est par exemple configuré pour contrôler la syntaxe de la trame T à filtrer acquise et pour transmettre la trame T à filtrer au bloc de filtrage 22 en fonction du contrôle de la syntaxe de la trame T.

Le module de contrôle 42 est par exemple configuré pour ne transmettre la trame T à filtrer au bloc de filtrage 22 que si la conformité entre la trame T à filtrer et la pluralité de règles de conformité acquise est vérifiée. Dans l'exemple dans lequel règles de conformité acquises sont des règles syntaxiques, le module de contrôle 42 est par exemple configuré pour ne transmettre la trame à filtrer au bloc de filtrage 22 que si la syntaxe de la trame T à filtrer est conforme aux règles syntaxiques acquises, c'est-à-dire que si la trame T respecte une syntaxe associée aux règles syntaxiques acquises.

En d'autres termes, le module de contrôle 42 est ainsi par exemple configuré pour ne pas transmettre la trame à filtrer au bloc de filtrage 22 si la conformité entre la trame T à filtrer et la pluralité de règles de conformité acquise n'est pas vérifiée.

Comme vu plus haut, dans l'exemple de la figure 2, le bloc de filtrage 22 acquiert la trame T à filtrer depuis le bloc de contrôle de conformité. En variante non illustrée, le bloc de filtrage 22 acquiert la trame T directement depuis le premier réseau 12.

Le module de configuration 26 est configuré pour stocker un jeu d'instructions d'extraction, un jeu d'instructions d'évaluation et un jeu d'instructions d'action. A cet effet, le module de configuration 26 comprend par exemple une mémoire (non représentée) sur laquelle sont stockés les jeux d'instruction d'extraction, d'évaluation et d'action. Dans des variantes, le module de configuration 26 comprend une pluralité de mémoires et/ou au moins un réseau sur lequel sont stockés, et/ou transitent, les jeux d'instruction d'extraction, d'évaluation et d'action.

Les instructions du jeu d'instructions d'extraction et/ou de vérification et/ou d'action sont de préférence arrangées sous la forme d'arbres décisionnels. Ainsi, certaines instructions du jeu d'instructions dépendent d'autres instructions du jeu d'instructions. En variante, les instructions du jeu d'instructions d'extraction et/ou de vérification et/ou d'exécution sont arrangées sous la forme de tables non hiérarchisées.

Comme illustré en figure 2, le module de configuration 26 est connecté au premier module d'extraction 28, au premier module de vérification 30 et au premier module d'action 32 et est configuré pour communiquer au moins une instruction du jeu de données d'extraction au premier module d'extraction 28, pour communiquer au moins une instruction du jeu de données de vérification au premier module de vérification 30 et pour communiquer au moins une instruction du jeu de données d'action au premier module d'action 32.

Par exemple, comme cela sera exposé plus loin et comme illustré en figure 2, le module de configuration 26 est en outre connecté au deuxième module d'extraction 34, au deuxième module de vérification 36 et au deuxième module d'action 38 et est en outre configuré pour communiquer au moins une instruction du jeu de données d'extraction au deuxième module d'extraction 34, pour communiquer au moins une instruction du jeu de données de vérification au deuxième module de vérification 36 et pour communiquer au moins une instruction du jeu de données d'action au deuxième module d'action 38.

Dans le mode de réalisation de la figure 2 dans lequel le bloc de filtrage 22 comprend en outre une mémoire de configuration 39, et comme cela sera décrit par la suite, la mémoire de configuration 39 est configurée pour stocker une donnée d'initialisation.

Le premier module d'extraction 28 est configuré pour exécuter au moins une instruction du jeu d'instructions d'extraction afin d'initialiser un ensemble d'opérandes de filtrage de la trame en fonction de la trame T. Ainsi, le premier module d'extraction 28 est configuré pour initialiser l'ensemble d'opérandes de filtrage en fonction de la trame T et d'au moins une instruction du jeu d'instructions d'extraction.

Comme cela sera exposée par la suite, les opérandes de filtrage correspondent par exemple aux données auxquelles la trame est comparée à l'aide d'opérateurs en vue de son filtrage.

Le premier module d'extraction 28 est par exemple configuré pour exécuter au moins une instruction du jeu d'instructions d'extraction afin d'initialiser au moins un opérande de filtrage de l'ensemble d'opérandes de filtrage initialisés, depuis la trame T. Le premier module d'extraction 28 est alors par exemple configuré pour lire la trame et pour extraire de la trame T l'au moins un opérande de filtrage en fonction de l'au moins une instruction du jeu d'instructions exécutée, l'au moins un opérande extrait de la trame correspondant à au moins un des opérandes de filtrage initialisés par le premier module d'extraction.

Le premier module d'extraction 28 est par exemple en outre configuré pour exécuter au moins une instruction du jeu d'instructions d'extraction afin d'initialiser l'ensemble d'opérandes de filtrage en outre en fonction de la donnée d'initialisation stockée sur la mémoire de configuration 39.

Le premier module d'extraction 28 est par exemple configuré pour exécuter au moins une instruction du jeu d'instructions d'extraction afin d'initialiser au moins un opérande de filtrage de l'ensemble d'opérandes de filtrage initialisés, depuis la donnée d'initialisation stockée dans la mémoire de configuration 39.

La donnée d'initialisation stockée dans la mémoire de configuration 39 est par exemple une constante stockée de façon permanente ou non dans la mémoire de configuration 39.

Comme cela sera décrit plus en détail par la suite, le premier module d'action 32 est par exemple configuré pour exécuter au moins une instruction du jeu d'instructions d'action afin de stocker une donnée d'initialisation provenant de la trame T dans la mémoire de configuration 39 en fonction de la vérification de règles de filtrage par le module de vérification 30. Dans cet exemple, la donnée d'initialisation stockée dans la mémoire de configuration 39 est alors une donnée représentative d'un contexte de filtrage, la donnée étant issue d'une trame précédemment filtrée et étant utilisée pour le filtrage d'une trame T à filtrer.

Le deuxième module d'extraction 34 est configuré pour exécuter au moins une instruction du jeu d'instructions d'extraction afin d'initialiser un ensemble d'opérandes d'automates protocolaires en fonction de la trame. Ainsi, le deuxième module d'extraction 34 est configuré pour initialiser l'ensemble d'opérandes d'automates protocolaires en fonction de la trame T et d'au moins une instruction du jeu d'instructions d'extraction.

Comme cela sera exposé par la suite, les opérandes d'automates protocolaires correspondent par exemple à des données de contrôle d'une dynamique protocolaire.

Le deuxième module d'extraction 34 est configuré pour exécuter au moins une instruction du jeu d'instructions d'extraction afin d'initialiser au moins un opérande d'automates protocolaires de l'ensemble d'automates protocolaires initialisés, depuis la trame. Le deuxième module d'extraction 34 est alors par exemple configuré pour lire la trame et pour extraire de la trame T l'au moins un opérande d'automate protocolaire en fonction de l'au moins une instruction du jeu d'instruction exécutée, l'au moins un opérande d'automate protocolaire extrait de la trame T correspondant à au moins un des opérandes d'automates protocolaires initialisés par le deuxième module d'extraction 34.

Le deuxième module d'extraction 34 est par exemple en outre configuré pour exécuter au moins une instruction du jeu d'instructions d'extraction afin d'initialiser l'ensemble d'opérandes d'automates protocolaires en outre en fonction de la donnée d'initialisation stockée sur la mémoire de configuration 39.

Le deuxième module d'extraction 34 est par exemple configuré pour exécuter au moins une instruction du jeu d'instructions d'extraction afin d'initialiser au moins un opérande d'automate protocolaire de l'ensemble d'opérandes d'automate protocolaire, depuis la donnée d'initialisation stockée dans la mémoire de configuration 39.

La donnée d'initialisation stockée dans le module de stockage est par exemple une constante stockée de façon permanente dans la mémoire de configuration 39.

Comme cela sera décrit plus en détail par la suite, le deuxième module d'action 38 est par exemple configuré pour exécuter au moins une instruction du jeu d'instructions d'action afin de stocker une donnée d'initialisation provenant de la trame T dans la mémoire de configuration 39 en fonction de la vérification de règles d'automates protocolaires.

La donnée d'initialisation stockée dans le module de stockage est alors une donnée représentative d'un contexte protocolaire, la donnée étant issue d'une trame précédemment filtrée et étant utilisée pour le filtrage d'une trame T à filtrer.

Dans un mode de réalisation préféré, et comme illustré en figure 2, le premier module d'extraction 28 et le deuxième module d'extraction 34 sont configurés pour initialiser simultanément les opérandes de filtrage, respectivement d'automates protocolaires.

Dans un mode de réalisation préféré, et comme illustré en figure 2, le dispositif électronique 10 comprend une mémoire opérationnelle 44. Comme cela sera décrit plus en détails par la suite, la mémoire opérationnelle 44 forme un module de stockage de données configuré pour stocker des données issues de la trame T filtrée.

La mémoire opérationnelle 44 est par exemple formée par une entité distincte de la mémoire de configuration 39. Alternativement, la mémoire opérationnelle 44 et la mémoire de configuration 39 sont formées par un même composant.

Le premier module d'extraction 28 est par exemple configuré pour initialiser l'ensemble d'opérandes de filtrage simultanément au stockage de la trame T sur la mémoire opérationnelle 44.

En alternative, ou en complément, le premier module d'extraction 28 est par exemple configuré pour stocker sur la mémoire 44 les opérandes de filtrage initialisés.

Le deuxième module d'extraction 34 est par exemple configuré pour initialiser l'ensemble d'opérandes d'automate protocolaire simultanément au stockage de la trame T sur la mémoire opérationnelle 44.

En alternative, ou en complément, le deuxième module d'extraction 34 est par exemple configuré pour stocker sur la mémoire 44 les opérandes d'automate protocolaire initialisés.

Le premier module de vérification 30 est configuré pour exécuter au moins une instruction du jeu d'instructions d'évaluation afin de vérifier des règles de filtrage en fonction des opérandes de filtrage initialisés. En d'autres termes, le premier module de vérification 30 est configuré pour vérifier des règles de filtrage en fonction des opérandes de filtrage initialisés et d'au moins une instruction du jeu d'instructions d'évaluation.

Le premier module de vérification 30 est par exemple configuré pour obtenir les opérandes de filtrage initialisés depuis le premier module d'extraction 28 ou depuis la mémoire opérationnelle 44.

Le premier module de vérification 30 est par exemple configuré pour obtenir des opérateurs de filtrage par l'exécution de l'au moins une instruction du jeu d'instructions d'évaluation, la trame T étant comparée aux opérandes de filtrage initialisés à l'aide des opérateurs obtenus.

Le deuxième module de vérification 36 est configuré pour exécuter au moins une instruction du jeu d'instructions d'évaluation afin de vérifier des règles d'automates protocolaires en fonction des opérandes d'automates protocolaires initialisés. En d'autres termes, le deuxième module de vérification 36 est configuré pour vérifier des règles d'automates protocolaires en fonction des opérandes d'automate protocolaire initialisés et d'au moins une instruction du jeu d'évaluation. Le deuxième module de vérification 36 est ainsi configuré pour vérifier la dynamique protocolaire de la trame T.

Le deuxième module de vérification 36 est par exemple configuré pour obtenir les opérandes de filtrage initialisés depuis le deuxième module d'extraction 34 ou depuis la mémoire opérationnelle 44.

Le deuxième module de vérification 36 est par exemple configuré pour obtenir des règles protocolaires par l'exécution de l'au moins une instruction du jeu d'instructions d'évaluation, les opérandes d'automate protocolaire initialisés étant comparés aux règles protocolaires obtenues pour vérifier les règles d'automates protocolaires.

Le premier module de vérification 30 et le deuxième module de vérification 36 sont par exemple configurés pour vérifier simultanément les règles de filtrage, respectivement d'automates protocolaires.

Dans un mode de réalisation préféré, le premier module de vérification 30 et/ou le deuxième module de vérification 36 comprennent une pluralité de moteurs de vérification de règles de filtrage, respectivement une pluralité de moteurs de vérification de règles d'automates protocolaires.

Chaque moteur du premier module de vérification 30 est de préférence configuré pour vérifier au moins une règle de filtrage indépendamment des autres moteurs, c'est-à-dire indépendamment de la vérification de règles de filtrage par les autres moteurs de vérification.

Chaque moteur du deuxième module de vérification 36 est de préférence configuré pour vérifier au moins une règle d'automate protocolaire indépendamment des autres moteurs, c'est-à-dire indépendamment de la vérification de règles de vérification d'automate protocolaire par les autres moteurs de vérification.

Le premier module d'action 32 est configuré pour exécuter au moins une instruction du jeu d'instructions d'action afin d'effectuer une action sur la trame T en fonction de la vérification des règles de filtrage. En d'autres termes, l'action sur la trame T est effectuée en fonction de la vérification des règles de filtrage et du jeu d'instructions d'actions.

Dans le mode de réalisation présenté en figure 2 dans lequel la trame T est stockée sur la mémoire opérationnelle 44, le premier module d'action 32 est configuré pour effectuer une action sur la trame T stockée.

Le premier module d'action 32 est par exemple configuré pour effectuer les actions suivantes sur la trame : adjonction de données à la trame, modification de données de la trame, suppression de données de la trame.

En variante, ou en complément, le premier module d'action 32 est configuré pour supprimer la trame T ou transmettre la trame vers le deuxième réseau informatique.

Le premier module d'action 32 est par exemple configuré pour transmettre la trame T vers le deuxième réseau informatique 14 si les règles des filtrages ont été vérifiées en fonction des opérandes de filtrage initialisés, par le premier module de vérification 30. Par exemple, le premier module d'action 32 est configuré pour transmettre la trame T vers le deuxième réseau informatique 14 si la comparaison des opérandes de filtrage initialisés avec la trame T à l'aide d'opérateurs obtenus par le premier module de vérification 30 correspond à une conformité de la trame aux règles de filtrage.

Le premier module d'action 32 est par exemple configuré pour supprimer la trame T si les règles des filtrages n'ont pas été vérifiées en fonction des opérandes de filtrage initialisées par le premier module de vérification 30.

Comme vu plus haut, le premier module d'action 32 est en outre par exemple configuré pour stocker une donnée d'initialisation provenant de la trame T dans la mémoire de configuration 39 en fonction de la vérification des règles de filtrage. Par exemple, le premier module d'action 32 est configuré pour stocker un champ de la trame T dans la mémoire de configuration 39, le champ de la trame T ainsi stocké formant une donnée d'initialisation pour initialiser l'ensemble d'opérandes de filtrage pour le filtrage d'une trame T ultérieure à la trame pour laquelle un champ de la trame a été stocké dans la mémoire de configuration 39.

Le deuxième module d'action 38 est configuré pour exécuter au moins une instruction du jeu d'instructions d'action afin d'effectuer une action d'automate protocolaire en fonction de la vérification des règles d'automates protocolaires.

Les actions d'automates protocolaires comprennent par exemple le transfert de la trame vers le premier module d'action 32, ou le blocage de la trame.

Comme vu plus haut, le deuxième module d'action 38 est en outre par exemple configuré pour stocker une donnée d'initialisation provenant de la trame T dans la mémoire de configuration 39 en fonction de la vérification des règles d'automate protocolaire. Par exemple, le deuxième module d'action 38 est configuré pour stocker un champ de la trame T dans la mémoire de configuration 39 39, le champ de la trame T ainsi stocké formant une donnée d'initialisation pour initialiser l'ensemble d'opérandes d'automates protocolaires pour le filtrage d'une trame T ultérieure à la trame pour laquelle un champ de la trame a été stocké dans la mémoire de configuration 39.

Comme illustré en figure 2 et comme vu plus haut, le deuxième module d'action 38 est par exemple configuré pour en outre transmettre la trame T au premier module d'action 32, le deuxième module d'action 38 étant ainsi disposé logiquement en amont du premier module d'action 32.

En particulier, le deuxième module d'action 38 est par exemple configuré pour ne transmettre la trame T au premier module d'action 32 que si les règles d'automates protocolaires ont été vérifiées en fonction des opérandes d'automates protocolaires initialisés, par le deuxième module de vérification 36.

Le premier module d'extraction 28, le premier module de vérification 30 et le premier module d'action 32, et de préférence le deuxième module d'extraction 34, le deuxième module de vérification 36 et le deuxième module d'action 38 sont chacun réalisés sous forme d'un composant logique programmable, c'est-à-dire implémentés ou réalisés dans un tel composant, et en particulier sous la forme d'un FPGA (de l'anglais *Field Programmable GateArray*) ou d'un circuit ASIC (de l'anglais *Application Spécifie Integrated Circuit*)*.* Par réalisé sous la forme d'un FPGA ou d'un circuit ASIC, on comprendra que le ou les modules sont intégrés dans le FPGA ou le circuit ASIC, de sorte à ce qu'ils soient fomés par les composants du FPGA ou du circuit ASIC.

Dans un mode de réalisation particulier, le module de configuration 26 est réalisé sous la forme d'un FPGA ou d'un circuit ASIC de sorte que le bloc de filtrage 22 est entièrement réalisé sous forme d'un FPGA ou d'un circuit ASIC.

Par exemple, le module d'injection 40 et le module de contrôle 42 sont eux aussi réalisés sous forme d'un FPGA ou d'un circuit ASIC, de sorte que la première unité de filtrage soit entièrement réalisée sous forme d'au moins un FPGA ou d'au moins un circuit ASIC.

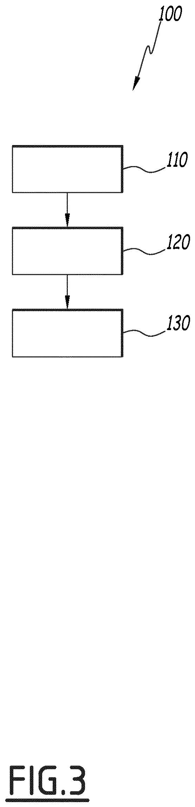

En référence à la figure 3, un procédé de filtrage 100, mis en oeuvre par un dispositif de filtrage 10 tel que décrit plus haut, va maintenant être présenté.

Le procédé 100 comprend une étape d'initialisation 110, une étape d'évaluation 120 et une étape d'action 130.

Lors de l'étape d'initialisation 110, au moins une instruction du jeu d'instructions d'extraction est exécutée afin d'initialiser un ensemble d'opérandes de filtrage en fonction de la trame T.

Par exemple, le premier module d'extraction 28 exécute au moins une instruction du jeu d'instructions d'extraction afin d'initialiser au moins un opérande de filtrage de l'ensemble d'opérandes de filtrage initialisés directement depuis la trame T. En variante, ou en complément, le premier module d'extraction 28 exécute par exemple au moins une instruction du jeu d'instructions d'extraction afin d'initialiser au moins un opérande de filtrage de l'ensemble d'opérandes de filtrage initialisés depuis une donnée d'initialisation stockée sur la mémoire de configuration 39. Dans ce cas, la donnée d'initialisation stockée sur la mémoire de configuration 39 est une constante ou est par exemple une donnée ayant été stockée par le premier module d'action 32 en tant que donnée d'initialisation.

Lorsque le bloc de filtrage 22 comprend un deuxième module d'extraction 34, le deuxième module d'extraction 34 exécute en outre par exemple au moins une instruction du jeu d'instructions d'extraction afin d'initialiser au moins un opérande d'automate protocolaire lors de l'étape d'initialisation 110.

Lors de l'étape de vérification 120, au moins une instruction du jeu d'instructions d'évaluation est exécutée afin de vérifier des règles de filtrage en fonction des opérandes de filtrage initialisés.

Par exemple, le premier module de vérification 30 compare les opérandes de filtrage initialisés à la trame T à l'aide d'opérateurs résultant de l'exécution du jeu d'instruction d'évaluation.

Lorsque le bloc de filtrage 22 comprend un deuxième module de vérification 36, le deuxième module de vérification 36 exécute en outre par exemple au moins une instruction du jeu d'extraction afin de vérifier des règles d'automates protocolaires en fonction des opérandes d'automates protocolaires initialisés.

Lors de l'étape d'action 130, au moins une instruction du jeu d'instructions d'action est exécutée afin d'effectuer sur la trame une action en fonction de la vérification des règles de filtrage.

Le premier module d'action 32 ajoute des données à la trame T, modifie des données de la trame T ou supprime par exemple des données de la trame en fonction de la vérification des règles de filtrage.

Le premier module d'action 32 supprime en outre par exemple la trame T ou transmet en outre par exemple la trame T vers le deuxième réseau informatique 18.

Le premier module d'action 32 stocke en outre par exemple une donnée d'initialisation provenant de la trame T dans la mémoire de configuration 39 en fonction de la vérification des règles de filtrage.

Lorsque le bloc de filtrage 22 comprend un deuxième module de configuration 34, un deuxième module d'extraction 36 et un deuxième module d'action 38, le deuxième module d'action 38 exécute en outre par exemple au moins une instruction du jeu d'instructions d'action afin d'effectuer une action d'automate protocolaire en fonction de la vérification des règles d'automates protocolaires.

## Revendications

1. Dispositif électronique de filtrage de données (10) configuré pour filtrer des données entre un premier réseau informatique (12) et un deuxième réseau informatique (14), le dispositif électronique de filtrage (10) comprenant une première unité de filtrage (16), configurée pour filtrer une trame de données (T) depuis le premier réseau informatique vers le deuxième réseau informatique, la première unité de filtrage (16) comprenant un bloc de filtrage (22),
le bloc de filtrage (22) comprenant :
- un module de configuration (26), configuré pour stocker un jeu d'instructions d'extraction, un jeu d'instructions d'évaluation et un jeu d'instructions d'action,
- un premier module d'extraction (28), configuré pour exécuter au moins une instruction du jeu d'instructions d'extraction afin d'initialiser un ensemble d'opérandes de filtrage en fonction de la trame (T),
- un premier module de vérification (30), configuré pour exécuter au moins une instruction du jeu d'instructions d'évaluation afin de vérifier des règles de filtrage en fonction des opérandes de filtrage initialisés, et
- un premier module d'action (32), configuré pour exécuter au moins une instruction du jeu d'instructions d'action afin d'effectuer une action sur la trame (T) en fonction de la vérification des règles de filtrage,
le premier module d'extraction (28), le premier module de vérification (30) et le premier module d'action (32) étant réalisés sous forme d'un FPGA ou d'un circuit ASIC,
les instructions du jeu d'instructions d'extraction et/ou de vérification et/ou d'exécution étant arrangées sous la forme d'arbres décisionnels.

2. Dispositif électronique (10) selon la revendication 1, dans lequel le bloc de filtrage (22) comprend en outre une mémoire de configuration (39), configurée pour stocker une donnée d'initialisation, le premier module d'extraction (28) étant configuré pour exécuter au moins une instruction du jeu d'instructions d'extraction afin d'initialiser l'ensemble d'opérandes de filtrage en outre en fonction de la donnée d'initialisation stockée.

3. Dispositif électronique (10) selon la revendication 2, dans lequel le premier module d'action (32) est en outre configuré pour exécuter au moins une instruction du jeu d'instructions d'action afin de stocker une donnée d'initialisation provenant de la trame (T) dans la mémoire de configuration (39) en fonction de la vérification des règles de filtrage.

4. Dispositif électronique (10) selon l'une quelconque des revendications précédentes, dans lequel la première unité de filtrage (16) comprend un bloc de contrôle de conformité (24) comprenant :
- un module d'injection de règles de conformité (40),
- un module de contrôle (42), configuré pour :
+ acquérir la trame à filtrer depuis le premier réseau informatique (12);
+ acquérir une pluralité de règles de conformité depuis le module d'injection de règles conformité (40); et
+ transmettre la trame (T) à filtrer au bloc de filtrage (22) en fonction d'un contrôle de la conformité entre la trame (T) à filtrer et la pluralité de règles de conformité acquise.

5. Dispositif électronique (10) selon l'une quelconque des revendications précédentes, dans lequel le dispositif électronique comprend une mémoire opérationnelle (44), le premier module d'extraction (34) étant configuré pour initialiser l'ensemble d'opérandes de filtrage simultanément au stockage de la trame (T) sur la mémoire opérationnelle (44), le premier module d'action (32) étant configuré pour effectuer une action sur ladite trame (T) stockée.

6. Dispositif électronique (10) selon l'une quelconque des revendications précédentes, dans lequel le dispositif comprend :
- un deuxième module d'extraction (34), configuré pour exécuter au moins une instruction du jeu d'instructions d'extraction afin d'initialiser un ensemble d'opérandes d'automates protocolaires en fonction de la trame (T),
- un deuxième module de vérification (36), configuré pour exécuter au moins une instruction du jeu d'instructions d'évaluation afin de vérifier des règles d'automates protocolaires en fonction des opérandes d'automates protocolaires initialisés, et
- un deuxième module d'action (38), configuré pour exécuter au moins une instruction du jeu d'instructions d'action afin d'effectuer une action d'automate protocolaire en fonction de la vérification des règles d'automates protocolaires.

7. Dispositif électronique (10) selon la revendication 5, dans lequel :
- le premier module d'extraction (28) et le deuxième module d'extraction (34) sont configurés pour initialiser simultanément les opérandes de filtrage, respectivement d'automates protocolaires ; et/ou
- le premier module de vérification (30) et le deuxième module de vérification (36) sont configurés pour vérifier simultanément les règles de filtrage, respectivement d'automates protocolaires.

8. Dispositif électronique (10) selon l'une quelconque des revendications précédentes, dans lequel le premier module de vérification (30), comprend une pluralité de moteurs de vérification des règles de filtrage, chaque moteur étant configuré pour vérifier au moins une règle de filtrage indépendamment des autres moteurs de vérification.

9. Dispositif électronique (10) selon l'une quelconque des revendications précédentes, dans lequel les actions effectuées par le premier module d'action (32) comprennent :
- l'adjonction de données à la trame (T), la modification de données de la trame (T), la suppression de données de la trame (T); et/ou
- la suppression de la trame (T), la transmission de la trame (T) vers le deuxième réseau informatique (14).

10. Dispositif électronique (10) selon l'une quelconque des revendications précédentes, dans lequel la première unité de filtrage (16) comprend au moins une diode (20) configurée pour bloquer un transfert de données depuis le deuxième réseau informatique (18) vers le premier réseau informatique (16).

11. Dispositif électronique (10) selon l'une quelconque des revendications précédentes, dans lequel la première unité de filtrage (16) est configurée pour filtrer la trame de données (T) au niveau d'une couche OSI de niveau supérieur ou égal à 3.

12. Dispositif électronique (10) selon l'une quelconque des revendications précédentes, dans lequel le dispositif (10) comprend une deuxième unité de filtrage (18) semblable à la première unité de filtrage (16), la deuxième unité de filtrage (18) étant configurée pour filtrer des données depuis le deuxième réseau informatique (14) vers le premier réseau informatique (12).

13. Procédé de filtrage de données (100) entre un premier réseau informatique (12) et un deuxième réseau informatique (14), mis en oeuvre par un dispositif électronique (10) selon l'une quelconque des revendications 1 à 12 comprenant les étapes suivantes :
initialisation (110), par l'exécution d'au moins une instruction du jeu d'instructions d'extraction afin d'initialiser un ensemble d'opérandes de filtrage en fonction d'une trame (T),
- vérification (120), par l'exécution d'au moins une instruction du jeu d'instructions d'évaluation afin de vérifier des règles de filtrage en fonction des opérandes de filtrage initialisés, et
- action (130), par l'exécution d'au moins une instruction du jeu d'instructions d'action afin d'effectuer une action sur la trame (T) en fonction de la vérification des règles de filtrage.
